# EUROPÄISCHE PATENTSCHRIFT

(11) **EP 2 518 847 B1**
(45) Veröffentlichungstag und Bekanntmachung des Hinweises auf die Patenterteilung: **09.08.2017**
(21) Anmeldenummer: 12002953.3
(22) Anmeldetag: 26.04.2012
(51) Int. Cl.: H02G 3/08, H02G 3/22, F16L 5/10

(54) **Gehäusedurchführung**
Housing feed-through
Passage de boîtier

(30) Priorität: 28.04.2011 DE 102011018796
(43) Veröffentlichungstag der Anmeldung: 31.10.2012
(73) Patentinhaber: Jacob GmbH, 71394 Kernen (DE)
(72) Erfinder: Sohn, Wolfgang, D-71549 Auenwald (DE)
(74) Vertreter: Jendricke, Susann

(56) Entgegenhaltungen:
- EP-A1- 1 842 271
- WO-A1-2005/002016
- DE-C- 640 746
- DE-U- 7 211 579
- FR-A1- 2 710 790
- US-A- 5 444 183

## Beschreibung

Die Erfindung betrifft eine Gehäusedurchführung mit einem Rahmen, der mindestens eine Rahmenöffnung zur Durchführung eines Kabels aufweist, und mit einer den Querschnitt der Rahmenöffnung durchspannenden elastomeren Trennwand, in der mindestens eine Durchtrittsöffnung für das Kabel vorgesehen ist, wobei die vorgesehene Durchtrittsöffnung durch ein materialtrennendes Verfahren unter Erzeugung einer Trennung hergestellt ist.

Gehäusedurchführungen der in Rede stehenden Art sind aus der Praxis bekannt. Sie werden an einer Wand, bspw. an einer Schaltschrankwand oder an einer Maschinengehäusewand, montiert und dienen dazu, dass Kabel durch sie und die Wandöffnung hindurchgeführt werden. Dabei sollen Funktionen wie Zugentlastung und Abdichtung erfüllt werden. Gehäusedurchführungen ersetzen teilweise herkömmliche Kabelverschraubungen, wo es darum geht, eine größere Anzahl von Kabeln zu montieren, wenn die Verwendung von Kabelverschraubungen zu montageaufwendig, zu teuer, oder zu platzeinnehmend ist.

Aus dem Dokument DE 197 31 448 C2 ist eine Befestigungsvorrichtung für Rundkabel in Wandungen bekannt. Der Rahmen dieser Befestigungsvorrichtung besteht aus zwei starren Rahmenteilen mit Rahmenöffnungen zur Durchführung eines Kabels. Zwischen den Rahmenteilen ist eine elastomere Trennwand angeordnet, die die Rahmenöffnungen teilweise verschließt. Die elastomere Trennwand weist eine Vielzahl ausgestanzter Öffnungen für ein Kabel auf, die beim Durchschieben des Kabels aufgeweitet werden, sodass die Trennwand eng am Kabel anliegt. Dadurch wird erreicht, dass die Rahmenöffnung bei durchgeführtem Kabel abgedichtet ist. Wenn das Kabel mit Zug beaufschlagt wird, wird die Trennwand gegen eine Rückhalteplatte gedrückt, so das eine Zugentlastung erzielt wird. Nachteilig ist hierbei, dass bereits vor der Montage des Kabels eine Öffnung vorhanden ist und somit erst nach Montage des Kabels eine Abdichtung erfolgt. Bis zur Montage kann unerwünschte Feuchtigkeit ungehindert eindringen. Auch nach der Entfernung des Kabels ist wiederum eine Öffnung vorhanden, die der gewünschten Dichtigkeit entgegenwirkt.

In der Praxis sind bereits Lösungen bekannt, bei der die elastomere Trennwand so ausgebildet ist, dass sie eine ringförmige Dünnstelle aufweist, an der die elastomere Trennwand beim Durchstoßen des Kabels aufreißt. Diese Lösung hat aber zum einen den Nachteil, dass die Qualität der Durchstoßkante sehr stark von der Geometrie und stofflichen Beschaffenheit des Kabels als auch vom Geschick der Bedienperson abhängt, zum anderen nach Demontage des Kabels nicht mehr dicht ist. Zudem muss die Trennwand mit den Dünnstellen aufwendig hergestellt werden.

Die Druckschrift DE 103 33 499 A1 zeigt eine Kabeldurchführungsplatte, die einen zusätzlichen Stopfen umfasst, der bereits die Rahmenöffnung schließt. Dieser Stopfen ist entweder lose oder unverlierbar mit dem Rahmenteil verbunden. Dies hat zwar den Vorteil, dass vor Montage des Kabels die Öffnung dicht verschlossen ist und nach Demontage des Kabels auch wieder dicht verschlossen werden kann, führt aber zu einem aufwendig herzustellenden Rahmenteil oder - bei einem losen Stopfen - zu einem erhöhten Montageaufwand.

Aus der Praxis ist eine Gehäusedurchführung bekannt, bei der die Öffnungen in der elastomeren Trennwand nicht über den vollen Umfang freigestanzt wurden, so dass der innere Kern nicht entfernt werden kann, sondern durch einen dünnen Steg noch mit der elastomeren Trennwand verbunden ist. Damit bleibt der Kern bei nichtmontiertem Kabel bündig in der elastomeren Trennwand und bildet eine dichte Einheit. Um den Kern besser in seiner Umrandung zu halten, ist die Ausstanzung des Kerns in axialer Richtung konkav gestaltet. Damit wird ein Formschluss zwischen Kern und Trennwand erzielt. Bei Montage des Kabels klappt der Kern nach innen weg und gibt die Öffnung für die Kabelmontage frei. Da der Kern noch vorhanden ist, kann er nach Demontage des Kabels wieder bündig in die elastomere Trennwand eingefügt werden. Mit dieser Lösung wird aber nur eine unzureichende Dichtigkeit erzeugt, weil zum einen die Dichtigkeit sehr stark von der Qualität der Stanzung abhängt, da zwischen Kern und elastomerer Trennwand kein Spalt entstehen darf. Zum anderen neigen die, insbesondere größeren, Kerne zum Kollabieren, sodass sich ein undichter Spalt zeigt. Vor allem ist keine Dichtigkeit bei Schwallwasser gegeben, da dann die Kraft des Schwallwassers auf den Kern zu groß wird und dieser nach innen ausweicht.

Weiterhin ist aus der Druckschrift DE10 2005 031 686 A1 eine gattungsgemäße Kabeldurchführungsplatte bekannt, bei der zusätzlich zu der gestanzten elastomeren Trennwand noch eine geschlossene Folie parallel zur Trennwand eingesetzt wird, die die Rah-menöffnung(en) und die Öffnung(en) in der elastomeren Trennwand vollständig überspannt. Die Folie wird bei der Montage des Kabels durchstoßen. Damit ist eine Dichtigkeit vor der Montage gewährleistet. Nachteilig ist jedoch, dass mit der Folie ein zusätzliches Element benötigt wird und dass nach der Demontage des Kabels eine Dichtigkeit nicht mehr hergestellt werden kann. Eine weitere Gehäusedurchführung gemäß dem Oberbegriff des Anspruchs 1 ist aus der DE 7211579 U bekannt. Ausgehend von der Druckschrift DE 197 31 448 C2 liegt der Erfindung die Aufgabe zugrunde, eine verbesserte Gehäusedurchführung anzugeben, die einen geringen Herstellungsaufwand erfordert und die eine einfache Kabelmontage ermöglicht sowie die Dichtheit der Gehäusedurchführung, insbesondere vor der Kabelmontage, gewährleistet. Nach einem bevorzugten Ausführungsbeispiel soll die Durchtrittsöffnung nach Demontage des Kabels wieder verschließbar sein.

Die voranstehende Aufgabe wird nach einer ersten Alternative durch die Merkmale des Patentanspruches 1 gelöst. Danach ist eine Gehäusedurchführung der in Rede stehenden Art derart ausgestaltet, dass die elastomere Trennwand aus Plattenmaterial besteht, dass die vorgesehene Durchtrittsöffnung durch einen Schnitt oder eine Stanzung unter Erzeugung einer Trennung hergestellt ist, dass sich die so hergestellte Trennung nicht über die gesamte Dicke (D) der elastomeren Trennwand erstreckt und dass die Trennung in Form einer kreisförmigen Soll-Bruch-Stelle ausgeführt ist oder dass sie voneinander beabstandete Enden aufweist.

Erfindungsgemäß ist erkannt worden, dass der Herstellungsaufwand verringert werden kann, wenn die elastomere Trennwand in vorteilhafter Weise bearbeitet wird. Anstatt eine vollständige Durchtrennung durchzuführen und eine tatsächliche Öffnung zu erstellen, wird nur bis zu einer bestimmten Tiefe in die elastomere Trennwand gearbeitet, so dass noch Material verbleibt, das den Verschluss realisiert. Vor der Montage ist folglich eine hohe Dichtigkeit gewährleistet

Die vereinfachte Kabelmontage wird dadurch erreicht, dass durch die Trennung bzw. Nut in der Trennwand ein präziser Öffnungsverlauf vorgegeben ist. Wenn das Kabel montiert wird, wird der Verschluss nur im durch die Materialtrennung schwachen Bereich durchstoßen. Es muss somit durch den Monteur bei der Montage nicht darauf geachtet werden, dass sich eine saubere Trennfläche an der elastomeren Trennwand ausbildet, das Kabel wird durch die Trennung quasi zur Soll-Bruch-Stelle geführt. Durch den materialtrennenden Vorgang bei der Herstellung der Trennung, stellt sich durch die Kerbwirkung des Schnitts oder der Stanzung ein sauberer Abriss des Materials ein. Zudem ermöglicht die erfindungsgemäße Gehäusedurchführung, dass die elastomere Trennwand aus kostengünstigem Plattenmaterial hergestellt werden kann.

Die voranstehende Aufgabe wird nach einer zweiten Alternative durch die Merkmale des Patentanspruches 5 gelöst. Danach ist eine Gehäusedurchführung der in Rede stehenden Art derart ausgestaltet, dass der Verschluss der Durchtrittsöffnung im Bereich der Trennung durch die Zugabe eines Mediums hergestellt ist, so dass die Durchtrittsöffnung bis zur Durchführung des Kabels verschlossen ist. Mit anderen Worten: Die Trennung wird anschließend durch Zugabe eines Mediums wieder aufgehoben.

Im Hinblick auf die zweite Alternative der Erfindung ist erkannt worden, dass auch bei einer vollständigen Durchtrennung der elastomeren Trennwand eine hohe Dichtigkeit vor der Montage dadurch erreicht werden kann, dass die entstandene Kompletttrennung wieder zumindest teilweise mit einem Medium verfüllt wird, die Trennung also wieder aufgehoben wird. Im Grunde wird der Verschluss durch ein Medium realisiert, was bei der ersten Alternative durch das Trennwandmaterial selbst herbeigeführt worden ist. Im Grunde ersetzt das Medium den nach der ersten Alternative verbliebenen Trennwandrest, wobei die Befüllung in ihrer dann erhaltenen Formgebung nicht identisch zum Trennwandrest nach der ersten Alternative zu sein braucht. Das Medium bzw. das Verfüllmaterial könnte die Trennung vollständig oder teilweise ausfüllen, dies hängt von den Materialeigenschaften ab. Bei der Kabelmontage bietet sich derselbe Vorteil wie bei der ersten Alternative, da bei der zweiten Alternative eben dort geöffnet wird, wo sich das Medium innerhalb der Trennung zwischen Trennwand und zu durchstoßender Materialfläche erstreckt. Das Medium könnte ein Klebstoff sein oder durch Aufvulkanisieren realisiert werden.

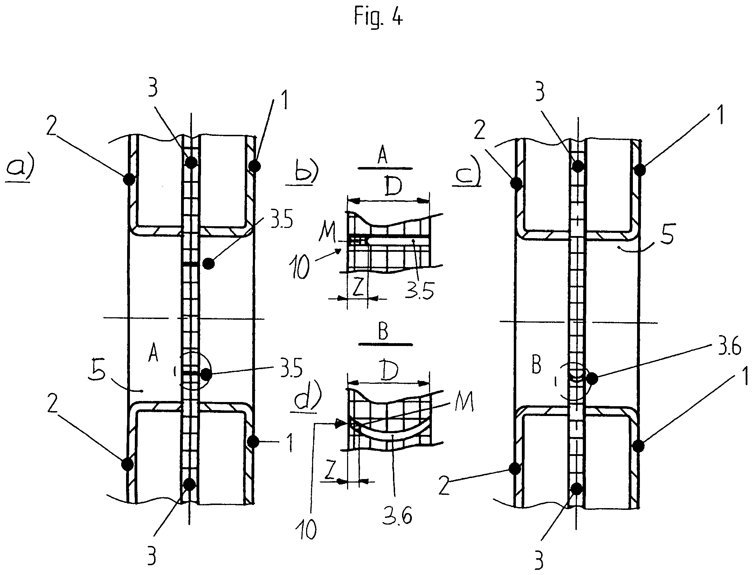

Die in die Trennwand eingearbeitete Trennung könnte eine Abmessung aufweisen, die über die Hälfte der Dicke der elastomeren Trennwand hinausgeht. Auf diese Weise ist einerseits ein ausreichender Verschluss, andererseits eine leichte Durchstoßbarkeit gewährleistet. Dies gilt für beide Alternativen der Erfindung, wobei dann bei der zweiten Alternative der Zugabebereich der Trennung, innerhalb der das Medium verfüllt ist (Fig. 4), über einen geringen Teil der Dicke der elastomeren Trennwand erstreckt. Der Zugabebereich könnte in etwa dem verbleibenden Trennwandrest gemäß der ersten Alternative der Erfindung entsprechen. Der Zugabebereich bietet die Möglichkeit, in Abhängigkeit von der zu erzielenden Dichte gewählt zu werden. Die Verfüllung könnte in Abhängigkeit von gewünschter Dichte und den Stoffeigenschaften variabel sein. Bei Verwendung eines Mediums in Form von Klebstoff oder gewonnen durch Nachvulkanisation ist darauf zu achten, dass die Festigkeit des Mediums nicht größer ist als die Festigkeit des Elastomers aus dem die Trennwand besteht, so dass beim Durchstoßen der Zugabebereich geöffnet wird und nicht die elastomere Trennwand.

Bei der erfindungsgemäßen Gehäusedurchführung gemäß der ersten Alternative könnte Trennung in vorteilhaft einfacher Weise durch einen Stanzvorgang hergestellt sein. Bei der zweiten Alternative kommen weitere Trennverfahren, wie Wasserstrahlschneiden oder Lasertrennung in Betracht.

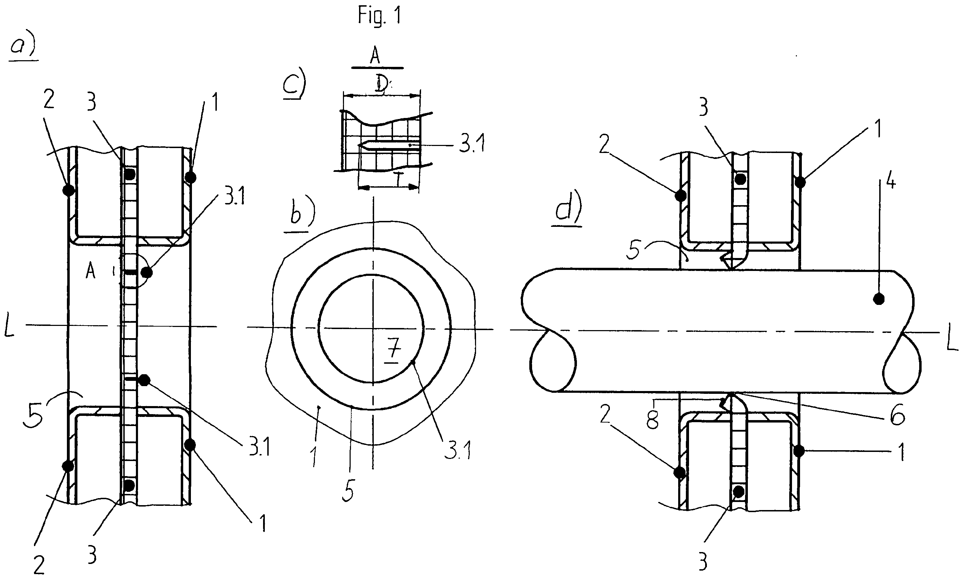

Die Trennung könnte in verschiedenen Ausführungen realisiert werden. Nach einer einfachen Ausführung (Fig. 1) könnte die Trennung in Form einer kreisförmigen Soll-Bruch-Stelle ausgeführt sein. Der Durchmesser dieser Soll-Bruch-Stelle könnte den des Kabels unterschreiten - vorausgesetzt dieses hat einen kreisförmigen Querschnitt, was in der Regel der Fall ist. Soll das Kabel durch die noch verschlossene Durchtrittsöffnung hindurchgeführt werden, könnte es das sich an die Trennung anschließende Restmaterial der Trennwand durchstoßen. Der von der Soll-Bruch-Stelle umgebene Trennwandbereich könnte auf der anderen Seite der Trennwand herunterfallen. Das Kabel verdrängt das quasi in den Durchmesser des Kabels eingreifende Elastomer so, dass ein Dichtungselement ausgebildet wird, das am Umfang des Kabels anliegt und einerseits abdichtet, andererseits auch eine Haltefunktion wahrnimmt und zur Zugentlastung des Kabels beiträgt.

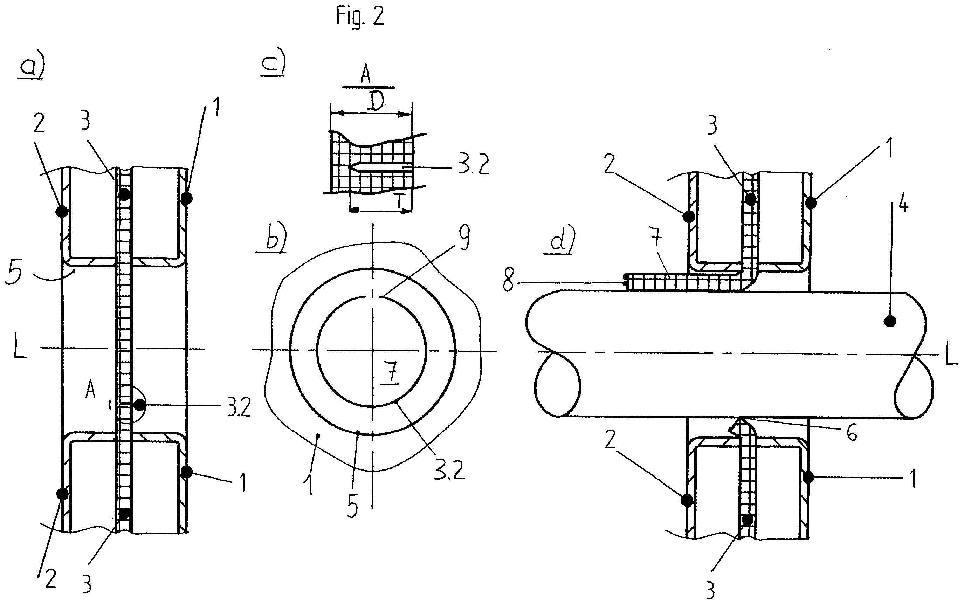

Bevorzugt ist eine weitere Ausführung (Fig. 2). Dort könnte eine Trennung vorgesehen sein, die voneinander beabstandete Enden aufweist. Mit anderen Worten: Die Trennung könnte nicht über den gesamten Umfang erfolgen. Der Abstand zwischen den Enden könnte zur Ausbildung eines Steges führen, der Scharnierfunktion wahrnimmt. Wie weit die Enden der Trennung beabstandet sein könnten, könnte festgelegt werden und hängt unter anderem von den Materialeigenschaften der elastomeren Trennwand ab. Hauptsache ist, dass das Kabel die elastomere Trennwand öffnen könnte, und zwei unterschiedliche Dichtelemente ausgebildet würden, wobei eines länger ist als das andere. Das längere Dichtelement könnte mehr Kabeloberfläche überdecken und somit mehr Zugkräfte aufnehmen und besser abdichten.

Die Abmessung des von der Trennung ausgebildeten Kreissegments könnte auch hier die Querschnittsabmessung des Kabels im Hinblick auf einen straffen Sitz zur Kraftaufnahme und Abdichtung unterschreiten. Die Formgebung der Trennung könnte in Bezug zum Kabel auf dessen Querschnitt abgestimmt sein.

Die voranstehend beschriebene weitere Ausführung wird deshalb bevorzugt, weil sie die Wiederverschließbarkeit der Durchtrittsöffnung der Trennwand nach Demontage des Kabels ermöglicht. Bei der Demontage gelangen die Dichtelemente in ihre Ausgangslage zurück und verschließen die Abdichtplatte bis zur Montage des nächsten Kabels. Hier kann manuelle Unterstützung hilfreich sein. Es muss vermerkt werden, dass der Grad der Dichtigkeit der erfindungsgemäßen Gehäusedurchführung nach Demontage und wiederverschlossener Durchtrittsöffnung niedriger ist als vor der Montage, da der Materialrest der Trennwand oder auch weitgehend das Medium nicht mehr vorhanden ist.

Besonders bei der wiederverschließbaren Ausführung der erfindungsgemäßen Gehäusedurchführung könnte die Trennung in vorteilhafter Weise eine konkave oder konvexe Kontur aufweisen. Anstatt eines zur Längsachse der Durchtrittsöffnung der Trennwand konstant parallelen Verlaufs der Trennung könnte diese nach innen oder außen gewölbt sein. Diese Konturen tragen zu einem intensiveren Verschluss nach Demontage des Kabels bei und erhöhen den Grad der Dichtigkeit.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 5 nachgeordneten Ansprüche, andererseits auf die nachfolgende Erläuterung mehrerer Ausführungsbeispiele der Erfindung anhand der Zeichnung zu verweisen. In Verbindung mit der Erläuterung der angeführten Ausführungsbeispiele der Erfindung werden auch im Allgemeinen bevorzugte Ausgestaltungen und Weiterbildungen der Lehre erläutert. In der Zeichnung zeigen
- Fig. 1 bei a): einen Teil einer erfindungsgemäßen Gehäusedurchführung in Schnittdarstellung, gemäß einem ersten Ausführungsbeispiel, vor der Montage eines Kabels, betreffend die Erfindung nach der ersten Alternative
- bei b): den Gegenstand von Fig. 1 a) in einer Vorderansicht,
- bei c): ein Detail A aus Fig. 1 a), vergrößert, betreffend die Trennung und
- bei d): den Gegenstand aus Fig. 1 a) nach der Montage eines Kabels,
- Fig. 2 bei a): einen Teil einer erfindungsgemäßen Gehäusedurchführung in Schnittdarstellung, gemäß einem zweiten Ausführungsbeispiel, vor der Montage eines Kabels,
- bei b): den Gegenstand von Fig. 2 a) in einer Vorderansicht,
- bei c): ein Detail A aus Fig. 2 a), vergrößert, betreffend die Trennung und
- bei d): den Gegenstand aus Fig. 2 a) nach der Montage eines Kabels,
- Fig. 3 bei a): einen Teil einer erfindungsgemäßen Gehäusedurchführung in Schnittdarstellung, gemäß einem dritten Ausführungsbeispiel, vor der Montage eines Kabels, betreffend eine konvex ausgeformte Trennung, betreffend die Erfindung nach der ersten Alternative
- bei b): ein Detail A aus Fig. 3 a), vergrößert, betreffend die Trennung,
- bei c): einen Teil einer erfindungsgemäßen Gehäusedurchführung in Schnittdarstellung, gemäß einem vierten Ausführungsbeispiel, vor der Montage eines Kabels, betreffend eine konkav ausgeformte Trennung, betreffend die Erfindung nach der ersten Alternative und
- bei d): ein Detail B aus Fig. 3 c), vergrößert, betreffend die Trennung und
- Fig. 4 bei a): einen Teil einer erfindungsgemäßen Gehäusedurchführung in Schnittdarstellung, gemäß einem fünften Ausführungsbeispiel, vor der Montage eines Kabels, betreffend die Erfindung nach der zweiten Alternative,
- bei b): ein Detail A aus Fig. 4 a), vergrößert, betreffend die Trennung,
- bei c): einen Teil einer erfindungsgemäßen Gehäusedurchführung in Schnittdarstellung, gemäß einem sechsten Ausführungsbeispiel, vor der Montage eines Kabels, betreffend die Erfindung nach der zweiten Alternative und
- bei d): ein Detail B aus Fig. 4 c), vergrößert, betreffend die Trennung.

Die Fig. 1a), 2a), 3a), 3c), 4a), 4c) zeigen einen Teil einer Gehäusedurchführung mit einem Rahmen 1, 2. Mit 1 ist das Rahmenteil verdeutlicht, an dem ein Kabel 4 eingeführt werden soll. Die Bezugsziffer 2 bezeichnet das Rahmenteil, aus der das Kabel 4 nach Durchführung durch eine Rahmenöffnung 5 austreten soll. Die Rahmenöffnung 5 des Rahmens 1, 2 ist verschlossen von einer elastomeren Trennwand 3, die zwischen den Rahmenteilen 1, 2 angeordnet ist. In der elastomeren Trennwand 3 sind Vorkehrungen in Form von Trennungen 3.1, 3.2, 3.3, 3.4, 3.5, 3.6 für eine Durchtrittsöffnung 6 getroffen. Die Trennungen 3.1, 3.2, 3.3, 3.4, 3.5, 3.6 sind durch ein materialtrennendes Verfahren erzeugt.

Nach der in den Figuren 1, 2, 3, gezeigten ersten Alternative der Erfindung unterschreitet die Abmessung T der Trennung 3.1, 3.2, 3.3 die Dicke D der elastomeren Trennwand 3, so dass die Durchtrittsöffnung 6 bis zur Durchführung des Kabels 4 verschlossen ist. Besonders deutlich ist in den Fig. 1c, 2c, 3b, 3d, gezeigt, dass die Trennung 3.1, 3.2, 3.3 vor der Montage nur eine Vertiefung ist und dass die Abmessung T der Trennung 3.1, 3.2, 3.3 über die Hälfte der Dicke D der elastomeren Trennwand 3 hinausgeht.

Nach dem ersten Ausführungsbeispiel der Erfindung, das sich auf die erste Alternative bezieht, ist die Trennung 3.1 gemäß Fig. 1b) kreisförmig und weist einen etwas kleineren Durchmesser auf als das Kabel 4. Die Fig. 1a) und bezüglich Detail A vergrößert Fig. 1c) zeigen, dass sich die Trennung 3.2 parallel zur Längsachse L erstreckt und einen geraden Verlauf aufweist. Fig. 1d) erläutert die Funktion der Gehäusedurchführung im Zusammenhang mit der Montage des Kabels 4. Das Kabel 4 wird am Rahmenteil 1 gegen die elastomere Trennwand 3, speziell gegen die Trennung 3.1 gedrückt, so dass eine vollständige Durchtrennung der Trennung 3.1 über die gesamte Dicke D der elastomeren Trennwand 3 erfolgt. Tatsächlich reißt die Trennung 3.1 über die gesamte Dicke D der elastomeren Trennwand 3 durch. Der ehemals von der Trennung 3.1 umgebene Trennwandbereich 7, der vor der Montage die Durchtrittsöffnung 6 geschlossen hat, fällt auf der der Montage gegenüberliegenden Seite, also hinter dem Rahmenteil 2, herunter. So wird die Durchtrittsöffnung 6 geöffnet, die aber direkt durch das Kabel 4 wieder verschlossen ist. Da die Trennung 3.1 einen etwas kleineren Durchmesser aufweist als das Kabel 4, verdrängt das Kabel 4 die die Trennung 3.1 umgebende elastomere Trennwand 3 in Montagerichtung, die nun eng ringförmig am Außenumfang des Kabels 4 anliegt und Dichtsowie Zugentlastungsfunktionen wahrnimmt. Innerhalb der Durchtrittsöffnung 6 ist im Zuge der Montage ein Dichtelement entstanden. Die Rissfläche 8 wölbt sich nach außen und ist an der Abdichtung nicht beteiligt.

Nach dem zweiten Ausführungsbeispiel der Erfindung, das sich auf die erste Alternative bezieht, ist die Trennung 3.2 gemäß Fig. 2b) kreisbogenförmig und weist zwei Enden 8 auf. Auch der Querschnitt ist - wie beim ersten Ausführungsbeispiel etwas kleiner als der des Kabels 4. Die Fig. 2a) und bezüglich Detail A vergrößert Fig. 2c) zeigen, dass sich die Trennung 3.2 parallel zur Längsachse L erstreckt und einen geraden Verlauf aufweist. Durch das zwischen den Enden 9 der Trennung 3.2 befindliche Material der elastomeren Trennwand 3 verbleibt der von der Trennung 3.2 umgebene Trennwandbereich 7 nach dem Durchstoßen der Trennung 3.2 während der Montage des Kabels 4 Teil der Trennwand 3. Wie in Fig. 2d) gezeigt, liegt der Trennwandbereich 7 als zusätzliches Dichtelement und auch Zugentlastungselement im montierten Zustand am Außenumfang des Kabels 4 an. Dabei wirkt das Material zwischen den Enden 9 wie ein Scharnier. Die Kabelumfangsabdichtung ist ansonsten so wie in Fig. 1d) realisiert. Wird das Kabel 4 demontiert, so klappt der Trennwandbereich 7 nach unten und verschließt die Durchtrittsöffnung 6. Dabei kann sich der Trennwandbereich 7 in einer Ebene mit der übrigen elastomeren Trennwand 3 erstrecken. Auch wenn sich nicht die hohe Dichtqualität der Gehäusedurchführung vor der ersten Montage des Kabels 4 erreichen lässt, ist der Verschluss durch den Trennwandbereich 7 doch von Vorteil.

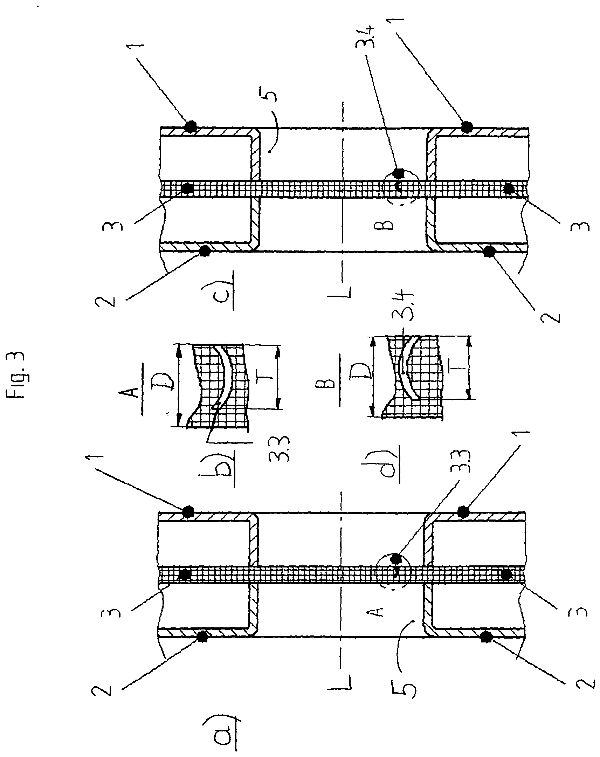

Nach dem dritten Ausführungsbeispiel der Erfindung, das sich auf die erste Alternative bezieht, ist die Trennung 3.3 gemäß Fig. 3a) und bezüglich Detail A vergrößert gemäß Fig. 3b) konvex geformt, wobei sich die Konvexität unter Bezug auf die Längsachse L ergibt.

Nach dem vierten Ausführungsbeispiel der Erfindung, das sich auf die erste Alternative bezieht, ist die Trennung 3.4 gemäß Fig. 3c) und bezüglich Detail B vergrößert gemäß Fig. 3d) konkav geformt, wobei sich die Konkavität unter Bezug auf die Längsachse L ergibt.

Die konvexe bzw. konkave Formgebung der Trennungen 3.3 und 3.4 ist dahingehend vorteilhaft, dass - angewendet auf das zweite Ausführungsbeispiel - nach Demontage des Kabels 4 der die Durchtrittsöffnung 6 verschließende Trennwandbereich 7 wieder formschlüssig in die Ebene der elastomeren Trennwand 3 verbringbar ist.

Nach der in Figur 4 gezeigten zweiten Alternative der Erfindung ist der Verschluss der Durchtrittsöffnung 6 im Bereich der Trennung 3.5, 3.6 durch die Zugabe eines Mediums M hergestellt, so dass die Durchtrittsöffnung 6 bis zur Durchführung des Kabels 4 verschlossen ist.

Bei der zweiten Alternative erstrecken sich die Trennungen 3.5 und 3.6 über die gesamte Dicke D der elastomeren Trennwand, sind jedoch teilweise mit dem Medium M verfüllt, das hier als Klebstoff vorliegt. So wird der durch den Trennvorgang entstehende Leerraum / Spalt im Wege einer kraftschlüssigen Verbindung anschließend wieder verschlossen.

Das Medium M ist so beschaffen, dass die Bindungskräfte geringer sind als die Bindungskräfte der elastomeren Trennwand 3, damit bei der Montage des Kabels 4 die öffnung der Durchtrittsöffnung 6 im Bereich des Mediums M oder zwischen Medium M und elastomerer Trennwand 3 erfolgt und nicht in der elastomeren Trennwand 3 selber.

Das Medium M erstreckt sich innerhalb eines Zugabebereiches 10 der Trennung 3.5, 3.6. Der Zugabebereich 10 erstreckt sich über einen geringen Teil der Dicke D der elastomeren Trennwand 3. Die Abmessung Z des Zugabebereiches 10 unterschreitet etwas die Dicke des verbleibenden Trennwandrests gemäß der ersten Alternative der Erfindung, der sich aus der Differenz der Dicke D der Trennwand 3 und der Abmessung T der jeweiligen Trennung 3.1, 3.2, 3.3, 3.4 ergibt.

Nach dem fünften Ausführungsbeispiel der Erfindung, das sich auf die zweite Alternative bezieht, ist die Trennung 3.5 gemäß Fig. 4a) und bezüglich Detail A vergrößert gemäß Fig. 4b) gerade ausgeführt und verläuft parallel zur Längsachse L.

Nach dem sechsten Ausführungsbeispiel der Erfindung, das sich auf die zweite Alternative bezieht, ist die Trennung 3.6 gemäß Fig. 4c) und bezüglich Detail B vergrößert gemäß Fig. 4d) konvex geformt, wobei sich die Konvexität unter Bezug auf die Längsachse L ergibt.

Bei allen sechs Ausführungsbeispielen sind die Trennungen 3.1, 3.2, 3.3, 3.4, 3.5, 3.6 durch einen Stanzvorgang hergestellt..

## Patentansprüche

1. Gehäusedurchführung mit einem Rahmen (1, 2), der mindestens eine Rahmenöffnung (5) zur Durchführung eines Kabels (4) aufweist, und mit einer den Querschnitt der Rahmenöffnung (5) durchspannenden elastomeren Trennwand (3), in der mindestens eine Durchtrittsöffnung (6) für das Kabel (4) vorgesehen ist, und wobei die vorgesehene Durchtrittsöffnung bis zur Durchführung des Kabels (4) verschlossen bleibt; **dadurch gekennzeichnet, dass** die elastomere Trennwand (3) aus Plattenmaterial besteht, dass die vorgesehene Durchtrittsöffnung (6) durch einen Schnitt oder eine Stanzung unter Erzeugung einer Trennung (3.1, 3.2, 3.3, 3.4) hergestellt ist, dass sich die so hergestellte Trennung (3.1, 3.2, 3.3, 3.4) nicht über die gesamte Dicke (D) der elastomeren Trennwand (3) erstreckt und dass die Trennung (3.1, 3.2, 3.3, 3.4) in Form einer kreisförmigen Soll-Bruch-Stelle ausgeführt ist oder dass sie voneinander beabstandete Enden (9) aufweist.

2. Gehäusedurchführung nach Anspruch 1, **dadurch gekennzeichnet, dass** die Trennung (3.1, 3.2, 3.3) über die Hälfte der Dicke (D) der elastomeren Trennwand (3) hinausgeht:

3. Gehäusedurchführung nach Anspruch 1 oder 2, dadurch gekenntzeichnet, dass die Trennung (3.1, 3.2, 3.3, 3.4, 3.5, 3.6) durch einen Stanzvorgang hergestellt ist.

4. Gehäusedurchführung nach einem der Ansprüche 1 bis 3, **dadurch gekennzeichnet, dass** die Trennung (3.3, 3.4, 3.6) in Bezug auf die Längsachse (L) der Durchtrittsöffnung (6) eine konkave (3.4) oder konvexe (3.3, 3.6) Kontur aufweist.

5. Gehäusedurchführung mit einem Rahmen (1, 2), der mindestens eine Rahmenöffnung (5) zur Durchführung eines Kabels (4) aufweist, und mit einer den Querschnitt der Rahmenöffnung (5) durchspannenden elastomeren Trennwand (3), in der mindestens eine Durchtrittsöffnung (6) für das Kabel (4) vorgesehen ist und wobei die vorgesehene Durchtrittsöffnung bis zur Durchführung des Kabels (4) verschlossen bleibt,
**dadurch gekennzeichnet,dass** die vorgesehene Durchtrittsöffnung (6) durch einen Schnitt oder eine Stanzung unter Erzeugung einer Trennung (3.5, 3.6) hergestellt ist und dass die Trennung (3.5, 3.6) durch die anschließende Zugabe eines Mediums (M) wieder aufgehoben ist.

6. Gehäusedurchführung nach Anspruch 5, **dadurch gekennzeichnet, dass** sich die Aufhebung der der Trennung (3.5, 3.6) durch das Medium (M) nur über einen geringen Teil der Dicke (D) der elastomeren Trennwand (3) erstreckt.

7. Gehäusedurchführung nach Anspruch 5 oder 6, **dadurch gekennzeichnet, dass** des sich bei dem Medium (M) um einen Klebstoff oder ein Vulkanisationsmittel handelt.

8. Gehäusedurchführung nach einem der Ansprüche 5 bis 7, **dadurch gekennzeichnet, dass** die Zug- und/oder Reißfestigkeit des Mediums (M) geringer ist als die der elastomeren Trennwand (3).

9. Gehäusedurchführung nach einem der Ansprüche 5 bis 8, **dadurch gekennzeichnet, dass** die Trennung (3.5, 3.6) durch Stanzung, Wasserstrahlschneiden oder Lasertrennung hergestellt ist.

## Claims

1. A housing through opening having a frame (1, 2), which has at least one frame opening (5) for passing through a cable (4), and having an elastomeric separating wall (3) traversing the cross section of the frame opening (5), in which at least one through opening (6) for the cable (4) is provided and the provided through opening remaining closed until the cable (4) is passed through,
**characterized in that** the elastomeric separating wall (3) consists of plate material, **in that** the provided through opening (6) is produced by means of a cut or stamping with the creation of a separation (3.1, 3.2, 3.3, 3.4), **in that** the thus produced separation (3.1, 3.2, 3.3, 3.4) does not extend over the entire thickness (D) of the elastomeric separating wall (3) and **in that** the separation (3.1, 3.2, 3.3, 3.4) is realized in the form of a circular predetermined breaking point or **in that** the separation has mutually spaced ends (9).

2. The housing through opening according to Claim 1, **characterized in that** the separation (3.1, 3.2, 3.3) extends beyond half of the thickness (D) of the elastomeric separating wall (3).

3. The housing through opening according to Claim 1 or 2, **characterized in that** the separation (3.1, 3.2, 3.3, 3.4, 3.5, 3.6) is produced by means of a stamping process.

4. The housing opening according to one of Claims 1 to 3, **characterized in that** the separation (3.3, 3.4, 3.6) has a concave (3.4) or convex (3.3, 3.6) contour in relation to the longitudinal axis (L) of the through opening (6).

5. A housing through opening having a frame (1, 2), which has at least one frame opening (5) for passing through a cable (4), and having an elastomeric separating wall (3) traversing the cross section of the frame opening (5), in which at least one through opening (6) for the cable (4) is provided and the provided through opening remaining closed until the cable (4) is passed through,
**characterized in that** the provided through opening (6) is produced by means of a cut or stamping with the creation of a separation (3.5, 3.6) and **in that** the separation (3.5, 3.6) is lifted further by the subsequent addition of a medium (M).

6. The housing through opening according to Claim 5, **characterized in that** the lifting of the separation (3.5, 3.6) by the medium (M) only extends over a small part of the thickness (D) of the elastomeric separating wall (3).

7. The housing through opening according to Claim 5 or 6, **characterized in that** the medium (M) is an adhesive or a vulcanizing agent.

8. The housing through opening according to one of Claims 5 to 7, **characterized in that** the tensile strength or tear strength of the medium (M) is lower than that of the elastomeric wall (3).

9. The housing through opening according to one of Claims 5 to 8, **characterized in that** the separation (3.5, 3.6) is produced by stamping, water jet cutting or laser separation.

## Revendications

1. Passage de boîtier avec un cadre (1,2), qui comporte au moins une ouverture de cadre (5) pour passage d'un câble (4) et avec une paroi de séparation (3) en matériau élastomère comblant la section de l'ouverture de cadre (5), dans laquelle au moins une ouverture de passage (6) est prévue pour le câble (4) et l'ouverture de passage prévue restant fermée jusqu'au passage du câble (4),caractérisé en ce quela paroi de séparation en matériau élastomère (3) est composée d'un matériau en plaques, en ce que l'ouverture de passage prévue (6) est réalisée par une découpe ou un estampage en produisant une séparation (3.1,3.2,3.3,3.4), en ce que la séparation ainsi réalisée (3.1,3.2,3.3,3.4) ne s'étend pas sur toute l'épaisseur (D) de la paroi de séparation en matériau élastomère (3) et en ce que la séparation (3.1,3.2,3.3,3.4) est exécutée sous la forme d'un emplacement de rupture théorique de forme circulaire ou en ce qu'elle comporte des extrémités (9) distantes l'une de l'autre.

2. Passage de boîtier selon la revendication 1, **caractérisé en ce que** la séparation (3.1,3.2,3.3) va au-delà de la moitié de l'épaisseur (D) de la paroi de séparation en matériau élastomère (3).

3. Passage de boîtier selon la revendication 1 ou 2, **caractérisé en ce que** la séparation (3.1,3.2,3.3,3.4,3.5,3.6) est réalisée par une opération d'estampage.

4. Passage de boîtier selon l'une quelconque des revendications 1 à 3, **caractérisé en ce que** la séparation (3.3,3.4,3.6) comporte un contour concave (3.4) ou convexe (3.3,3.6) par rapport à l'axe longitudinal (L) de l'ouverture de passage (6).

5. Passage de boîtier avec un cadre (1,2), qui comporte au moins une ouverture de cadre (5) pour passage d'un câble (4) et avec une paroi de séparation (3) en matériau élastomère comblant la section de l'ouverture de cadre (5), dans laquelle au moins une ouverture de passage (6) est prévue pour le câble (4) et l'ouverture de passage prévue restant fermée jusqu'au passage du câble (4), **caractérisé en ce que** l'ouverture de passage (6) prévue est réalisée par une découpe ou un estampage en produisant une séparation (3.5,3.6) et **en ce que** la séparation (3.5,3.6) est à nouveau supprimée par l'addition ultérieure d'un milieu (M).

6. Passage de boîtier selon la revendication 5, **caractérisé en ce que** la suppression de la séparation (3.5,3.6) par le milieu (M) ne s'étant que sur une faible partie de l'épaisseur (D) de la paroi de séparation en matériau élastomère (3).

7. Passage de boîtier selon la revendication 5 ou 6, **caractérisé en ce que** concernant le milieu (M), il s'agit d'une colle ou d'un agent de vulcanisation.

8. Passage de boîtier selon l'une quelconque des revendications 5 à 8, **caractérisé en ce que** la résistance à la traction et/ou à la rupture du milieu (M) est plus faible que celle de la paroi de séparation en matériau élastomère (3).

9. Passage de boîtier selon l'une quelconque des revendications 5 à 8, **caractérisé en ce que** la séparation (3.5,3.6) est réalisée par estampage, découpe au jet d'eau ou par séparation au laser.
